# EUROPÄISCHE PATENTSCHRIFT

(11) **EP 1 024 051 B1**
(45) Veröffentlichungstag und Bekanntmachung des Hinweises auf die Patenterteilung: **17.12.2003**
(21) Anmeldenummer: 00101591.6
(22) Anmeldetag: 27.01.2000
(51) Int. Cl.: B60R 1/06

(54) **Rückspiegel für Kraftfahrzeuge**
Rear view mirror for motor vehicles
Rétroviseur pour véhicules automobiles

(30) Priorität: 28.01.1999 DE 19903378
(43) Veröffentlichungstag der Anmeldung: 02.08.2000
(73) Patentinhaber: MEKRA Lang GmbH & Co. KG, 90765 Fürth (DE)
(72) Erfinder: Lang, Heinrich, 91465 Ergersheim (DE); Popp, Albrecht, 91629 Weihenzell (DE); Pfanz, Jürgen, 91583 Schillingsfürst (DE)
(74) Vertreter: Winter, Brandl, Fürniss, Hübner, Röss, Kaiser, Polte Partnerschaft

(56) Entgegenhaltungen:
- EP-A- 0 449 056
- DE-C- 19 520 320
- DE-U- 9 308 052
- US-A- 5 798 882

## Beschreibung

Die Erfindung betrifft einen Rückspiegel für Kraftfahrzeuge, nach dem Oberbegriff des Anspruches 1.

Es ist bekannt, Rückspiegel bzw. Rückspiegelgehäuse mit der hierin aufgenommenen Spiegelscheibe dadurch an einem Karosserieteil eines Kraftfahrzeuges zu befestigen oder hiermit zu verbinden, daß an dem Spiegelgehäuse zwei Haltearme aus Metall befestigt, beispielsweise angeschraubt werden und die beiden anderen freien Enden der Haltearme dann an dem betreffenden Karosserieteil befestigt, beispielsweise ebenfalls angeschraubt werden.

Es werden somit zwei separate Haltearme benötigt, welche unter Umständen auch unterschiedliche Form und/oder Länge haben müssen und darüber hinaus müssen diese beiden separaten Haltearme in jeweils separaten Fertigungsschritten an dem Spiegelgehäuse befestigt werden. Dies ist von herstellungstechnischen und lagertechnischen Gründen her gesehen nachteilig.

Die DE 93 08 052 U schlägt einen gattungsgemässen Rückspiegel für Kraftfahrzeuge vor, in dem eine Spiegelscheibe über einen Verschwenkmechanismus direkt an einer Trägerplatte befestigt ist, die ihrerseits einstückig mit Halteauslegern ausgebildet ist.

Die vorliegende Erfindung hat es sich zur Aufgabe gemacht, einen Rückspiegel für Kraftfahrzeuge so auszugestalten, daß die geschilderten Nachteile beseitigt sind.

Zur Lösung dieser Aufgabe schlägt die vorliegende Erfindung gemäß Anspruch 1 einen Rückspiegel für Kraftfahrzeuge vor, mit einer Spiegelscheibe, die in einem Spiegelgehäuse angeordnet ist und mit zwei das Spiegelgehäuse mit einem Karosserieteil des Kraftfahrzeugs verbindenden Haltearmen, wobei der Rückspiegel dadurch gekennzeichnet ist, daß die beiden Haltearme durch ein im wesentlichen quer zu den Haltearmen verlaufendes Anschlußteil miteinander verbunden sind, wobei das Anschlußteil und die beiden Haltearme einstückig ausgebildet sind und das Anschlußteil mit dem Spiegelgehäuse verbunden ist.

Durch den Gegenstand der vorliegenden Erfindung werden somit die bisher separat vorliegenden beiden Haltearme durch ein diesen beiden Haltearme gemeinsames, mit diesen einstückig ausgebildetes Anschlußteil verbunden. Die Einheit aus Anschlußteil und hieran einstückig ausgebildeten Haltearmen wird dann wiederum mit dem Spiegelgehäuse verbunden.

Hierdurch entfällt zunächst der Schritt des Anbringens zweier separater Anschlußteile an dem Spiegelgehäuse, so daß die Fertigung bzw. Endmontage des Rückspiegels schneller und mit weniger Aufwand erfolgen kann. Weiterhin stützt das Anschlußteil, welches aufgrund seines Verlaufs zwischen den beiden Haltearmen eine gewisse axiale Erstreckung hat, das Spiegelgehäuse in vorteilhafter Weise großflächig ab, so daß auch die Stabilität eines nach der Lehre der vorliegenden Erfindung ausgebildeten Rückspiegels verbessert wird.

Anstelle zweier separat herzustellender, zu lagernder und in der Fertigung zu manipulierender Haltearme wird beim Gegenstand der vorliegenden Erfindung nurmehr eine Einheit bestehend aus Anschlußteil und den beiden Haltearmen hergestellt, so daß sich die logistischen Probleme bei der Zwischenlagerung und Endfertigung deutlich verringern.

Nach einer bevorzugten Ausgestaltungsform verlaufen die beiden Haltearme im wesentlichen parallel zueinander und im wesentlichen senkrecht zu dem Anschlußteil. Abhängig von der jeweiligen Ein- oder Anbaulage an dem Karosserieteil können die Haltearme selbstverständlich auch im Winkel zueinander, d.h. von der Parallelität abweichend und/oder im Winkel zu dem Anschlußteil, d.h. von der senkrechten Ausrichtung hierzu abweichend sein.

Bevorzugt wird die Einheit aus Haltearmen und Anschlußteil aus Kunststoff gefertigt. Obgleich Kunststoff in der Regel geringere Festigkeit als Metall hat, ist aufgrund der einstückigen Ausbildung von Anschlußteil und Haltearmen und aufgrund der flächigen Anlage des Anschlußteiles an dem Spiegelgehäuse auch bei aus Kunststoff gefertigten Einheiten aus Haltearmen und Anschlußteil eine ausreichende Festigkeit gegeben. Darüber hinaus bietet die Fertigung aus Kunststoff u.a. die Vorteile einer Korrosionsunempfindlichkeit, geringerem Gewicht und die Möglichkeit der weitestgehend beliebigen Einfärbung des Materials.

Die Einheit aus Haltearmen und Anschlußteil kann beispielsweise spritzgegossen werden, was eine besonders rasche, formgenaue und technologisch problemlos beherrschbare Herstellungsmöglichkeit darstellt. Eine andere Möglichkeit wäre es, die Einheit aus Haltearmen und Anschlußteil im RTM-Verfahren (Resin Transfer Molding-Verfahren) herzustellen. Bei diesem Verfahren werden Formkerne in Gußformen eingelegt und dann unter hohem Druck mit einem Mantelkunststoff umspritzt. Hierdurch lassen sich besonders formgenaue, stabile und hochbelastbare Teile herstellen.

Das Anschlußteil kann eine über den Abstand der beiden Haltearme hinausgehende axiale Erstreckung haben. Hierdurch vergrößert sich in vorteilhafter Weise die Anlagefläche zwischen Anschlußteil und Spiegelgehäuse. Erstreckt sich hierbei das Anschlußteil axial beidseitig über den Abstand der beiden Haltearme hinaus, ist eine weitestgehend symetrische Anbringung der Haltearme an dem Anschlußteil und damit dem Spiegelgehäuse möglich, falls dies gewünscht sein sollte. Die axiale Erstreckung des Anschlußteils kann darüber hinaus so groß sein, daß sie der axialen Erstreckung des Spiegelgehäuses im wesentlichen entspricht. Hierdurch ist eine besonders großflächige Anlage zwischen Anschlußteil und Spiegelgehäuse erzielbar.

Sind das Anschlußteil und das Spiegelgehäuse lösbar miteinander verbunden, kann das Spiegelgehäuse von der Einheit aus Anschlußteil und Haltearmen abgenommen werden, wenn dies beispielsweise bei Beschädigungen der Spiegelscheibe oder aus anderen Gründen notwendig sein sollte.

Schließlich weisen das Anschlußteil und das Spiegelgehäuse zueinander korrespondierende Formschluß-Befestigungsmittel auf, mit denen die Verbindung zwischen Anschlußteil und Spiegelgehäuse besonders rasch erfolgen kann.

Weitere Einzelheiten, Aspekte und Vorteile der vorliegenden Erfindung ergeben sich aus der nachfolgenden Beschreibung einer Ausführungsform anhand der Zeichnung.

Es zeigt:
Fig. 1 eine perspektivische Ansicht auf eine Einheit bestehend aus Anschlußteil und hieran ausgebildeten Haltearmen; und
Fig. 2 eine teilweise geschnittene Draufsicht von oben zur Veranschaulichung, wie ein Spiegelgehäuse an der Einheit Haltarme/Anschlußteil anordenbar ist.

Die Beschreibung der vorliegenden Erfindung erfolgt exemplarisch anhand eines Außenrückspiegels für Kraftfahrzeuge, wobei der Rückspiegel auf der linken Seite, d.h. in aller Regel der Fahrerseite des Fahrzeuges angeordnet wird.

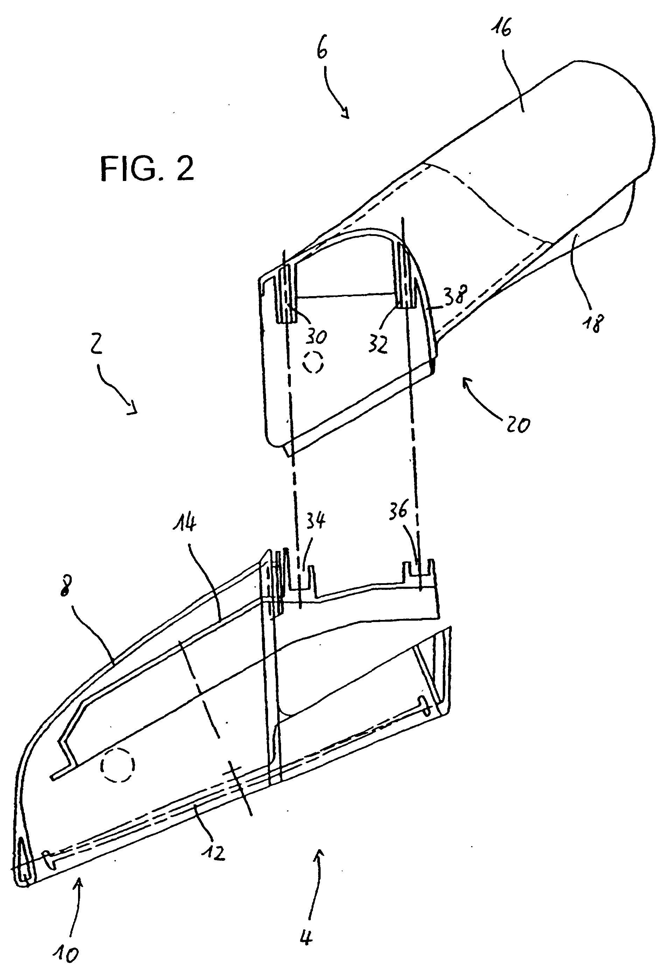

In der Zeichnung und zunächst in Fig. 2 ist mit dem Bezugszeichen 2 insgesamt ein erfindungsgemäßer Rückspiegel bezeichnet. Der Rückspiegel 2 umfaßt im wesentlichen ein Spiegelgehäuse 4 und eine Befestigungsvorrichtung 6, mit welcher das Spiegelgehäuse 4 im Abstand zu einem in der Zeichnung nicht näher dargestellten Karosserieteil eines Fahrzeuges befestigbar ist.

Das Spiegelgehäuse 4 weist den aus der Kfz-Technik allgemein bekannten und dort üblichen Querschnitt auf mit einer in Fahrtrichtung weisenden gewölbten Schale 8 und einer im wesentlichen planen, entgegen Fahrtrichtung weisenden Öffnung 10, in der eine Spiegelscheibe 12 eingesetzt ist.

Im Inneren des Spiegelgehäuses 4 befinden sich in bekannter Weise Einrichtungen zum Verstellen der Spiegelscheibe 12 gegenüber dem Spiegelgehäuse 4, um die Blickrichtung zu ändern, Heizvorrichtungen für die Spiegelscheibe 12 etc. Weiterhin befindet sich in der in Fig. 2 dargestellten Ausführungsform im Inneren des Spiegelgehäuses 4 eine sich im wesentlichen über die gesamte Breite und Höhe des Spiegelgehäuses 4 erstreckende Tragplatte 14. Die Tragplatte 14 ist mit dem Spiegelgehäuse 4 in Verbindung und stellt das Befestigungselement dar, mit welchem das Spiegelgehäuse 4 an der fahrzeug- oder karosserieseitigen Befestigungsvorrichtung 6 anordenbar ist, wie nachfolgend noch erläutert wird.

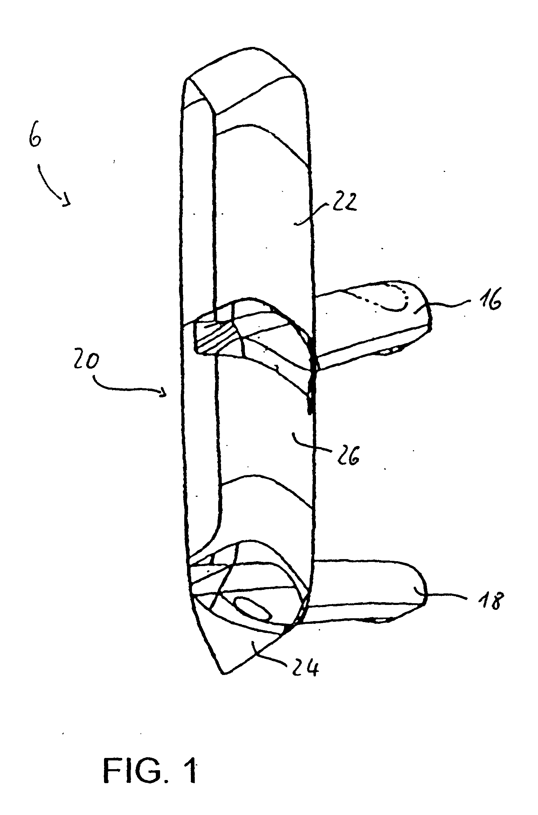

Die Befestigungsvorrichtung 6 ist gemäß Fig. 1 eine einstückige Einheit und umfaßt im wesentlichen zwei Haltearme 16 und 18 und ein Anschlußteil 20. Die beiden Haltearme 16 und 18 sind mit ihren anschlußteilseitigen Enden einstückig mit dem Anschlußteil 20 in Verbindung bzw. hieran ausgeformt. Die beiden freien äußeren Enden der Haltearme 16 und 18 sind zur Befestigung an dem Karosserieteil gedacht. Die Haltearme 16 und 18 können im wesentlichen parallel zu und im wesentlichen senkrecht zu dem Anschlußteil 20 verlaufen, oder aber sie können im Winkel zueinander und vom rechten Winkel zu dem Anschlußteil 20 abweichend angeordnet sein.

Gemäß Fig. 1 sind die beiden Haltearme 16 und 18 innen hohl. In ihnen können die Steuer- oder Versorgungskabel für die Verstellbewegung der Spiegelscheibe 12, die Versorgungsleitungen für die Spiegelheizung etc. verlegt werden.

Das Anschlußteil 20 ist gemäß Fig. 1 langgestreckt/schlank und hat in dieser Ausführungsform eine axiale Längenerstreckung, welche über den Abstand der beiden Haltearme 16 und 18 hinausgeht. Im Ausführungsbeispiel von Fig. 1 hat das Anschlußteil 20 eine über den oberen Haltearm 16 hinausverlaufende obere Erstreckung 22 und eine unter dem unteren Haltearm 18 liegende untere Erstreckung 24. Ein dazwischen liegendes Mittelteil 26 verbindet die beiden Haltearme 16 und 18 miteinander. Grundsätzlich wäre das Mittelteil 26 alleine ausreichend; durch die oberen und unteren Erstreckungen 22 und 24 hat das Anschlußteil 20 jedoch in vorteilhafter Weise eine größere Anlagefläche an dem Spiegelgehäuse 4 bzw. der Tragplatte 14.

Gemäß Fig. 2 weisen sowohl das Anschlußteil 20 als auch die Tragplatte 14 Formschluß-Befestigungsmittel 28 auf. Diese Befestigungsmittel 28 sind im dargestellten Ausführungsbeispiel in Form von stift- oder leistenförmigen Vorsprüngen 30 und 32 seitens des Anschlußteils 20 und in Form von zylinder- oder leistenförmigen Vertiefungen 34 und 36 seitens der Tragplatte 14 ausgebildet, in welche die Vorsprünge 30 und 32 eingreifen können. Zusätzlich zu dieser formschlüssigen Verbindung zwischen dem Anschlußteil 20 und der Tragplatte 14 und damit dem Spiegelgehäuse 4 sind noch weitere, den Eingriff der Formschluß-Befestigungsmittel sichernde Elemente vorhanden, beispielsweise Schrauben, Verrastungen oder dergleichen.

Man erkannt aus Fig. 2, daß im zusammengefügten Zustand ein umlaufender Rand 38 des Anschlußteiles 20 die Schale 8 des Spiegelgehäuses 4 ergänzt, so daß die Befestigungsmittel 28 bzw. der gesamte Innenraum der Schale 8 oder des Spiegelgehäuses 4 nach außen hin abgeschlossen ist und das Eindringen von Wasser oder anderen Verschmutzungen verhindert wird. Hierzu können sich im Bereich des Randes 38 oder seitens des Spiegelgehäuses 4 an den Fügekanten noch entsprechende Dichtungen befinden. Die Einheit aus Spiegelgehäuse 4 und Befestigungsvorrichtung 6 stellt somit im montierten Endzustand eine nach außen hin geschlossene wasserund winddichte aerodynamische Gesamtheit dar.

Die Einheit aus Anschlußteil 20 und den beiden Haltearmen 16 und 18, welche die Befestigungsvorrichtung 6 bildet, ist bevorzugt aus Kunststoff gefertigt. Hierbei kann die Befestigungsvorrichtung 6 beispielsweise im Spritzgußverfahren hergestellt werden, in welchem das Anschlußteil 20 und die beiden Haltearme 16 und 18 einstückig ausgebildet werden. Eine andere Vorgehensweise, die Einheit aus Anschlußteil 20 und einstückig hieran ausgebildeten Haltearmen 16 und 18 zu bilden, ist das sogenannte RTM-Verfahren, bei welchem ein Formkern in eine Gußform gelegt und anschließend mit hohem Druck mit Kunststoff umspritzt und getränkt wird, wonach diese Einheit ausgehärtet wird. Hierdurch lassen sich besonders formstabile und feste Körper bilden.

Die axiale Erstreckung des Anschlußteiles 20 kann gemäß Fig. 1 derart sein, daß sie im wesentlichen der Bauhöhe des Spiegelgehäuses 4 entspricht. Dies stellt selbstverständlich nur eine Ausgestaltungsform der vorliegenden Erfindung dar. Prinzipiell würde es genügen, nur den die beiden Haltearme 16 und 18 untereinander einstückig verbindenden Mittelteil 26 dazu heranzuziehen, die Verbindung zwischen der Befestigungsvorrichtung 6 und dem Spiegelgehäuse 4 herzustellen. Aufgrund der Erstreckungen 22 und 24 gemäß Fig. 1 erfolgt jedoch eine großflächige Anlage zwischen dem Anschlußteil 20 oder der Befestigungsvorrichtung 6 und dem Spiegelgehäuse 4 bzw. der dortigen Tragplatte 14, so daß diese Verbindung besonders sicher, stabil und vibrationsarm ist.

Die beiden Haltearme 16 und 18 und das Anschlußteil 20 bilden gemäß der obigen Beschreibung eine einstückig hergestellte Einheit. Es ist somit nicht mehr nötig, die beiden Haltearme 16 und 18 separat herzustellen, zu bevorraten, zu transportieren und an dem Spiegelgehäuse 4 zu montieren, da gemäß der vorliegenden Erfindung nunmehr diese beiden Haltearme 16 und 18 einstückig an dem Anschlußteil 20 ausgebildet sind, welches wiederum direkt an dem Spiegelgehäuse 4 bzw. der dortigen Tragplatte 14 befestigt wird. Ein nach der Lehre der vorliegenden Erfindung aufgebauter Rückspiegel ist somit einfacher und ökonomischer herzustellen. Die Verwendung von Kunststoff zur Herstellung der Befestigungsvorrichtung 6 bietet die Vorteile einer einfachen Herstellung auch komplizierter Formen, Korrosionsbeständigkeit, Kratzunempfindlichkeit und dauerhafte Durchfärbung des Materials. Trotz der Verwendung des strukturell an sich schwächeren Materials Kunststoff anstelle von Metall zur Herstellung der Haltearme 16 und 18 ist aufgrund der großen axialen Erstreckung des Anschlußteiles 20, welches im gewählten Ausführungsbeispiel der Bauhöhe des Spiegelgehäuses 4 weitestgehend entsprechen kann, eine ausreichend hohe Stabilität und Belastungsfähigkeit des gesamten Rückspiegels 2 sichergestellt.

## Patentansprüche

1. Rückspiegel für Kraftfahrzeuge, mit einer Spiegelscheibe (12) die in einem Spiegelgehäuse (4) angeordnet und an einer Tragplatte (14) befestigt ist, und mit zwei das Spiegelgehäuse (4) mit einem Karosserieteil des Kraftfahrzeuges verbindenden Haltearmen (16, 18), **dadurch gekennzeichnet,**
**daß** die beiden Haltearme (16, 18) durch ein im wesentlichen quer zu den Haltearmen (16, 18) verlaufendes Anschlußteil (20) miteinander verbunden sind,
**daß** das Anschlußteil (20) und die beiden Haltearme (16, 18) einstückig ausgebildet sind, und
**daß** das Anschlußteil (20) mit der Tragplatte (14) des Spiegelgehäuses (4) verbunden ist.

2. Rückspiegel nach Anspruch 1, **dadurch gekennzeichnet, daß** die beiden Haltearme (16, 18) im wesentlichen parallel zueinander und im wesentlichen senkrecht zu dem Anschlußteil(20) verlaufen.

3. Rückspiegel nach Anspruch 1 oder 2, **dadurch gekennzeichnet, daß** die Einheit aus Haltearmen (16, 18) und Anschlußteil (20) aus Kunststoff gefertigt ist.

4. Rückspiegel nach Anspruch 3, **dadurch gekennzeichnet, daß** die Einheit aus Haltearmen (16, 18) und Anschlußteil (20) spritzgegossen ist.

5. Rückspiegel nach Anspruch 3, **dadurch gekennzeichnet, daß** die Einheit aus Haltearmen (16, 18) und Anschlußteil (20) im RTM-Verfahren hergestellt ist.

6. Rückspiegel nach Anspruch 1, **dadurch gekennzeichnet, daß** sich das Anschlußteil (20) axial beidseitig (22, 24) über den Abstand der beiden Haltearme (16, 18) hinauserstreckt.

7. Rückspiegel nach Anspruch 1 oder 6, **dadurch gekennzeichnet, daß** die axiale Erstreckung des Anschlußteils (20) der axialen Erstreckung des Spiegelgehäuses (4) im wesentlichen entspricht.

8. Rückspiegel nach einem der Ansprüche 1 bis 7, **dadurch gekennzeichnet, daß** das Anschlußteil (20) und das Spiegelgehäuse (4) lösbar miteinander verbunden sind.

9. Rückspiegel nach einem der Ansprüche 1 bis 8, **dadurch gekennzeichnet, daß** das Anschlußteil (20) und das Spiegelgehäuse (4) zueinander korrespondierende Formschluß-Befestigungsmittel (30, 32, 34, 36) aufweisen.

## Claims

1. A rearview mirror for motor vehicles, with a mirror pane (12), which is placed in a mirror housing (4) and secured to a carrier plate (14), and with two support arms (16, 18) which connect the mirror housing (4) with a body part of the motor vehicle, **characterized in that**
the two support arms (16, 18) are bound together by means of a connection piece (20) which extends essentially transversely to the support arms (16, 18),
the connection piece (20) and the two support arms (16, 18) are made to be of one-part construction, and
the connection part (20) is connected with the carrier plate (14) of the mirror housing (4).

2. A rearview mirror in accordance with Claim 1, **characterized in that** the two support arms (16, 18) are essentially parallel to one another and extend essentially vertically to the connection piece 20.

3. A rearview mirror in accordance with Claim 1 or 2, **characterized in that** the unit of the support arms (16, 18) and the connection piece (20) is manufactured of plastic.

4. A rearview mirror in accordance with Claim 3, **characterized in that** the unit of the support arms (16, 18) and the connection piece (20) is manufactured by injection molding.

5. A rearview mirror in accordance with Claim 3, **characterized in that** the unit of the support arms (16, 18) and the connection piece (20) is manufactured by the RTM process.

6. A rearview mirror in accordance with Claim 1, **characterized in that** the connection piece (20) axially, on both sides (22, 24), extends beyond the separating distance of the two support arms (16, 18).

7. A rearview mirror in accordance with Claim 1 or 6, **characterized in that** the axial extension of the connection piece (20) essentially corresponds to the axial extension of the mirror housing (4).

8. A rearview mirror in accordance with one of Claims 1 to 7, **characterized in that** the connection piece (20) and the mirror housing (4) are releasably connected to one another.

9. A rearview mirror in accordance with one of Claims 1 to 8, **characterized in that** the connection piece (20) and the mirror housing (4) possess corresponding positive-engagement fastening means (30, 32, 34, 36).

## Revendications

1. Rétroviseur pour véhicules automobiles, comportant un miroir (12) disposé dans un boîtier de miroir (4) et fixé à une plaque de support (14), et comportant deux bras de maintien (16, 18) reliant le boîtier de miroir (4) à une partie de carrosserie du véhicule automobile, **caractérisé en ce que**
les deux bras de maintien (16, 18) sont reliés l'un à l'autre par le biais d'une pièce de raccordement (20) s'étendant pour l'essentiel transversalement par rapport aux bras de maintien (16, 18),
**en ce que** la pièce de raccordement (20) et les deux bras de maintien (16, 18) sont configurés en une seule pièce, et
**en ce que** la pièce de raccordement (20) est reliée à la plaque de support (14) du boîtier de miroir (4).

2. Rétroviseur selon la revendication 1, **caractérisé en ce que** les deux bras de maintien (16, 18) s'étendent pour l'essentiel parallèlement l'un à l'autre et pour l'essentiel perpendiculairement à la pièce de raccordement (20).

3. Rétroviseur selon la revendication 1 ou 2, **caractérisé en ce que** l'unité composée des bras de maintien (16, 18) et de la pièce de raccordement (20) est fabriquée en matière plastique.

4. Rétroviseur selon la revendication 3, **caractérisé en ce que** l'unité composée des bras de maintien (16, 18) et de la pièce de raccordement (20) est moulée par injection.

5. Rétroviseur selon la revendication 3, **caractérisé en ce que** l'unité composée des bras de maintien (16, 18) et de la pièce de raccordement (20) est fabriquée selon un procédé RTM.

6. Rétroviseur selon la revendication 1, **caractérisé en ce que** la pièce de raccordement (20) s'étend axialement des deux côtés (22, 24) au-delà de l'écart entre les deux bras de maintien (16, 18).

7. Rétroviseur selon la revendication 1 ou 6, **caractérisé en ce que** l'extension axiale de la pièce de raccordement (20) correspond pour l'essentiel à l'extension axiale du boîtier de miroir (4).

8. Rétroviseur selon l'une des revendications 1 à 7, **caractérisé en ce que** la pièce de raccordement (20) et le boîtier de miroir (4) sont reliés l'un à l'autre de façon amovible.

9. Rétroviseur selon l'une des revendications 1 à 8, **caractérisé en ce que** la pièce de raccordement (20) et le boîtier de miroir (4) présentent des moyens de fixation (30, 32, 34, 36) à emboîtement qui correspondent les uns avec les autres.
